# FASCICULE DE BREVET EUROPEEN

(11) **EP 1 564 829 B1**
(45) Date de publication et mention de la délivrance du brevet: **07.01.2009**
(21) Numéro de dépôt: 05100361.4
(22) Date de dépôt: 21.01.2005
(51) Int. Cl.: H01M 8/02

(54) **Plaque en aluminium revêtue d'une couche protectrice de nickel pour une pile à combustible**
Aluminiumplatte mit Nickel-Schutzschicht für eine Brennstoffzelle
aluminium plate with nickel protective layer for a fuel cell

(30) Priorité: 17.02.2004 FR 0450289
(43) Date de publication de la demande: 17.08.2005
(73) Titulaire: L'AIR LIQUIDE, Société Anonyme pour l'Etude et l'Exploitation des Procédés Georges Claude, 75007 Paris (FR)
(72) Inventeur: ROBERGE, Guillaume, 38300, BOURGOIN (FR)
(74) Mandataire: Le Moenner, Gabriel

(56) Documents cités:
- DE-C- 19 534 047
- US-A- 5 565 072
- US-A1- 2001 026 884
- US-A1- 2002 006 534

## Description

La présente invention concerne les piles à combustible, du type comprenant un empilage d'au moins une structure de plaques bi-polaires à base de carbone enserrant une membrane et en contact sur une autre face avec au moins une plaque métallique en aluminium.

Les piles à combustible, en particulier du type à membranes polymères échangeuses de protons (PEM), comportent classiquement un empilage de cellules élémentaires, disposées les unes à côté des autres, dans un assemblage communément appelé « Pack », dans lesquelles les plaques bi-polaires, anodiques ou cathodiques, destinées à l'amenée des gaz réactifs de part et d'autre de la membrane, sont généralement à base de carbone (graphite ou composite), ce qui pose des problèmes d'établissement de bonne liaison électrique, en particulier de contact électrique, avec des métaux conducteurs, en particulier l'aluminium.

Le document US 2001/026884 A1 décrit une pile à combustible comprenant un empilage d'au moins une structure de plaques bi-polaires à base de carbone enserrant une membrane et en contact avec au moins une plaque métallique en aluminium revêtue d'une couche à base de nickel, conforme au préambule de la revendication 1.

La présente invention à pour objet de proposer une architecture de piles à combustible permettant de pallier ces problèmes et d'utiliser largement l'aluminium dans la fabrication de plusieurs éléments du Pack de la pile à combustible.

Pour ce faire, selon une caractéristique de l'invention, la plaque d'aluminium est revêtue d'une couche à base de Nickel d'épaisseur n'excédant pas 50 µm, typiquement comprise entre 20 et 30 µm et la couche à base de nickel est formée par électro-déposition.

La demanderesse a en effet constaté que, de façon surprenante, le nickelage de plaques d'aluminium permettait de réaliser, et de maintenir à l'usage, d'excellents contacts électriques entre l'aluminium ainsi revêtu et des structures à base de carbone.

Avec un tel agencement, selon des caractéristiques plus particulières de l'invention :
- la plaque métallique est une plaque épaisse collectrice de courant et/ou constitue une face d'une cellule de refroidissement, comportant avantageusement des moyens de raccordement à un circuit de fluide de refroidissement.

D'autres caractéristiques et avantages de la présente invention ressortiront de la description suivante d'un mode de réalisation, donnée à titre illustratif mais nullement limitatif, faite en relation avec le dessin annexé, sur lequel :
La figure unique représente schématiquement en perspective éclatée des composants d'une architecture de piles à combustible selon l'invention.

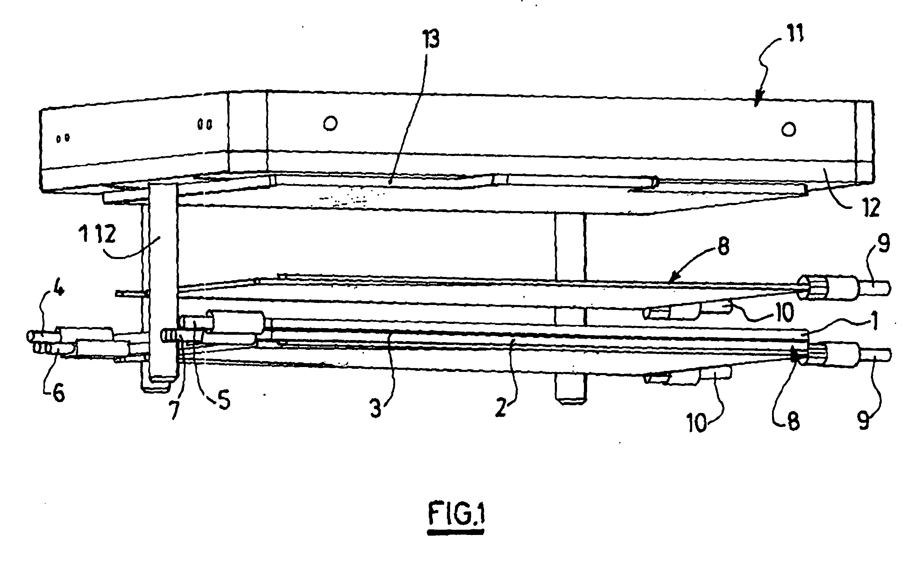

Sur la figure 1, on reconnaît une cellule élémentaire de pile à combustible constituée d'un sandwich de deux plaques bi-polaires 1 et 2 enserrant une membrane 3 en polymère revêtue de catalyseur. Le pack comporte une pluralité (typiquement au moins dix) de telles cellules élémentaires.

La plaque anodique 1 comporte une entrée et une sortie d'hydrogène, 4 et 5 respectivement, la plaque cathodique comprenant des entrée et sortie d'air, 6 et 7 respectivement.

Dans le mode de réalisation représenté, chaque cellule élémentaire est prise en sandwich entre deux cellules de refroidissement 8 formées par deux plaques adjacentes en aluminium délimitant entre elles des canaux ou chambres de fluide et pourvues chacune d'une entrée et d'une sortie de fluide de refroidissement 9 et 10, respectivement, typiquement de l'huile, avantageusement une alpha oléfine.

L'empilement des cellules élémentaires 1-3 et des cellules de refroidissement 8 est maintenu pressé entre deux plaques d'extrémité 11, dont une seule est représentée sur la figure 1, en étant maintenu latéralement par des pions périphériques 112. Chaque plaque d'extrémité 11 est associée, via une plaque isolante 12, à une plaque collectrice métallique épaisse 13, connectée à un câble électrique (non représenté).

Selon un aspect de l'invention, les plaques bi-polaires 1 et 2, définissant les chenaux d'amenée des gaz réactifs de part et d'autre de la membrane 3, sont réalisés en carbone, les chenaux étant obtenus par moulage et/ou par usinage.

Selon l'invention, la plaque d'extrémité 11 et les cellules de refroidissement 8 sont réalisées en aluminium, au moins leurs faces de contact planes étant revêtues d'une fine couche de nickel, à structure globulaire n'excédant pas typiquement 50 µm, avantageusement d'épaisseur entre environ 20 µm et 30 µm, déposée par électro-déposition, typiquement suivant un procédé tel que celui mis en oeuvre pour les cosses de câbles électriques sous la dénomination commerciale NICALEC par la société TECHNIQUE SURFACES à Evry (France).

La demanderesse a constaté qu'avec un interface nickelé de faible épaisseur, la résistance de contact entre carbone et aluminium était inférieure à 5 milliohm/cm², typiquement inférieure à 3 milliohm/cm², ce qui, pour une densité de courant élevée, de l'ordre de 1A/cm², provoque à l'interface une chute de tension inférieure à 5mV, typiquement inférieure à 3mV, ce qui est parfaitement acceptable pour une cellule élémentaire aux bornes desquelles la différence de potentiel ne descend pas au-dessous de 500 mV.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Pile à combustible comprenant un empilage d'au moins une structure de plaques bi-polaires à base de carbone (1, 2) enserrant une membrane (3) et en contact avec au moins une plaque métallique en aluminium (8 ; 13), revêtue d'une couche à base de nickel **caractérisée en ce que** la couche à base de nickel a une épaisseur n'excédant pas 50 µm et **en ce que** la couche à base de nickel est formée par électro-déposition.

2. Pile à combustible selon la revendication 1, **caractérisée en ce que** l'épaisseur de la couche à base de nickel est comprise entre environ 20 et 30 µm.

3. Pile à combustible selon l'une des revendications précédentes, **caractérisée en ce que** la plaque métallique est une plaque épaisse collectrice de courant (13).

4. Pile à combustible selon l'une des revendications précédentes, **caractérisée en ce que** la plaque métallique est une face d'une cellule de refroidissement (8).

5. Pile à combustible selon la revendication 4 **caractérisée en ce que** la cellule de refroidissement (8) comporte des moyens (9, 10) de raccordement à un circuit de fluide de refroidissement.

6. Pile à combustible selon la revendication 5 **caractérisée en ce que** le fluide de refroidissement est une alpha oléfine.

## Claims

1. Fuel cell comprising a stack of at least one structure of carbon-based bipolar plates (1, 2) tightly surrounding a membrane (3) and in contact with at least one metal plate made of aluminium (8; 13), coated with a nickel-based layer **characterized in that** the nickel-based layer has a thickness not exceeding 50 µm and **in that** the nickel-based layer is formed by electroplating.

2. Fuel cell according to Claim 1, **characterized in that** the thickness of the nickel-based layer is between approximately 20 and 30 µm.

3. Fuel cell according to one of the preceding claims, **characterized in that** the metal plate is a thick current-collecting plate (13).

4. Fuel cell according to one of the preceding claims, **characterized in that** the metal plate is a face of a cooling cell (8).

5. Fuel cell according to Claim 4, **characterized in that** the cooling cell (8) comprises means (9, 10) of connection to a cooling fluid circuit.

6. Fuel cell according to Claim 5, **characterized in that** the cooling fluid is an alpha-olefin.

## Patentansprüche

1. Brennstoffzelle umfassend ein Paket von mindestens einer Struktur aus Bipolarplatten auf Kohlenstoffbasis (1, 2), die eine Membran (3) umschließen und sich in Kontakt mit mindestens einer Metallplatte aus Aluminium (8 ; 13) befinden, welche mit einer Schicht auf Nickelbasis überzogen ist, **dadurch gekennzeichnet, dass** die Schicht auf Nickelbasis höchstens 50 µm dick ist und dass die Schicht auf Nickelbasis durch elektrochemische Abscheidung gebildet ist.

2. Brennstoffzelle nach Anspruch 1, **dadurch gekennzeichnet, dass** die Dicke der Schicht auf Nickelbasis ungefähr 20 bis 30 µm beträgt.

3. Brennstoffzelle nach einem der vorhergehenden Ansprüche, **dadurch gekennzeichnet, dass** es sich bei der Metallplatte um eine dicke Stromsammlerplatte (13) handelt.

4. Brennstoffzelle nach einem der vorhergehenden Ansprüche, **dadurch gekennzeichnet, dass** die Metallplatte eine Seite einer Kühlzelle (8) bildet.

5. Brennstoffzelle nach Anspruch 4, **dadurch gekennzeichnet, dass** die Kühlzelle (8) Mittel (9, 10) zum Anschließen an einen Kühlfluidkreislauf aufweist.

6. Brennstoffzelle nach Anspruch 5, **dadurch gekennzeichnet, dass** es sich bei dem Kühlfluid um ein alpha-Olefin handelt.
